Europäisches Patentamt

European Patent Office

Office européen des brevets

(11) Publication number: 0 351 032
A2

# EUROPEAN PATENT APPLICATION

(21) Application number: 89300828.4

(51) Int. Cl.⁴: **G11B 17/028 , G11B 7/00**

(22) Date of filing: 27.01.89

(30) Priority: 15.07.88 JP 175159/88

(43) Date of publication of application:
17.01.90 Bulletin 90/03

(84) Designated Contracting States:
DE FR GB

(71) Applicant: **PIONEER ELECTRONIC CORPORATION**
No. 4-1, Meguro 1-chome
Meguro-ku Tokyo 153(JP)

(72) Inventor: **Masunaga, Yoshifumi Pioneer Electronic Corp.**
Tokorozawa Works 2610, Hanazono 4-chome
Tokorozawa-shi Saitama(JP)
Inventor: **Simoda, Yoshitaka Pioneer Electronic Corp.**
Tokorozawa Works 2610, Hanazono 4-chome
Tokorozawa-shi Saitama(JP)

(74) Representative: **Jackson, Peter Arthur et al**
GILL JENNINGS & EVERY 53-64 Chancery Lane
London WC2A 1HN(GB)

(54) Optical disk player.

(57) An optical disk player has a magnetic clamping mechanism with a magnet surrounded by an anti-magnetism body for preventing flux leakage from influencing an optical pickup having a magnetic member therein.

FIG. 3

EP 0 351 032 A2

## OPTICAL DISK PLAYER

The present invention relates to a disk player for reproducing, by means of an optical pickup, information recorded on a disk such as a video disk, a compact disk, or the like, carrying an aural signal and a video signal.

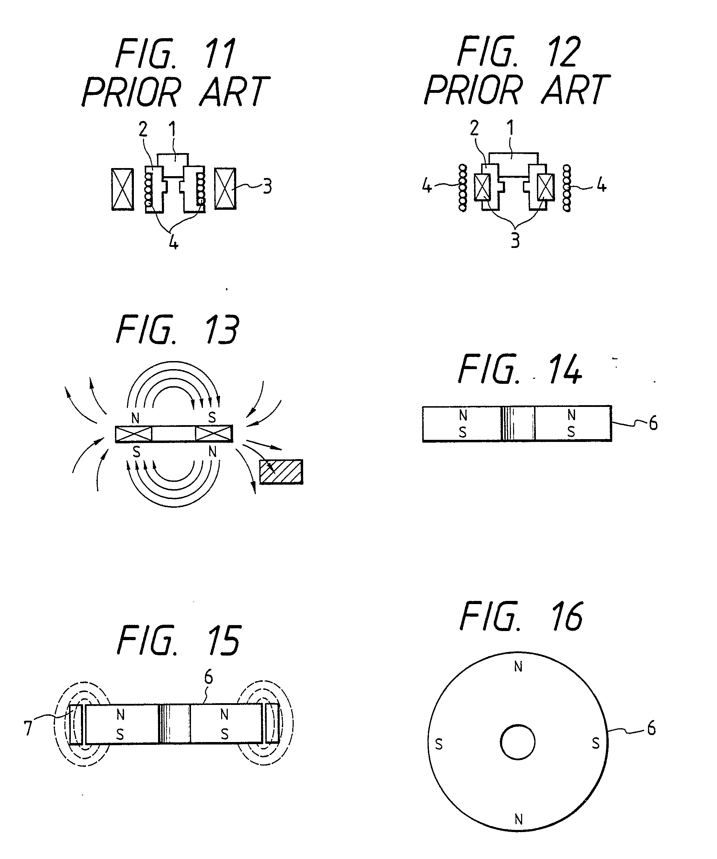

An optical pickup used in an optical disk player of the type mentioned above includes an MC-type optical pickup as shown in Fig. 11 and an MM-type optical pickup as shown in Fig. 12, the MC-type optical pickup being mainly used at present.

In the MM-type optical pickup, magnets 3 are attached on an outer periphery of a movable portion 2 of an actuator having an objective lens 1, and coils 4 for performing tracking, focusing, etc., are provided at the outside of the magnet 3, so that a tracking control current, a focusing control current, etc., are made to flow into the coils 4 to drive the movable portion 2 of the actuator in the focusing direction (in the direction of the optical axis of the objective lens), in the tracking direction (in the direction perpendicular to the optical axis of the objective lens) by means of forces generated between the coils 4 and the magnets 3.

In the MC-type optical pickup, on the other hand, coils 4 are attached on a movable portion 2 of an actuator having an objective lens 1, and the movable portion 2 is driven in the focusing direction, in the tracking direction, etc., by means of forces generated between the coils 4 and magnets 3 provided outside of the coils 4.

An example of a disk clamping apparatus for clamping a disk onto a turntable is a device in which a magnet is attached on the turntable and a magnetic plate such as an iron plate or the like is attached on a clamper for pressing the disk against the turntable.

The foregoing disk clamping apparatus is arranged so as to clamp the disk between the clamper and the turntable by means of an attraction force between the magnet and the magnetic plate, the clamper rotating as the disk rotates.

Generally, the magnet used in the disk clamping apparatus is magnetized so that a magnetic field is generated toward the magnetic plate to be attracted by the magnet as shown in Figs. 5 and 6. Even after the magnetic plate has been attracted to the magnet, a leakage field as shown in Fig. 13 is being generated, the leakage field being made to be an alternating field by the rotation of the clamper.

If an MM-type optical pick up is used in an optical disk player using such a disk clamping apparatus as described above, at the time of reproducing a record located at an inner circumferential portion of a disk, the magnet attached on the movable portion of the actuator comes close to the clamper and turntable disposed at the central position of the disk so that the actuator movable portion is affected by attraction or repulsion due to the alternating field of the disk clamping apparatus.

The influence appears as a force acting on the actuator movable portion mainly in the tracking direction, so that error rate of tracking error or the like is increased thereby reducing the reproducing capability of the optical disk player.

Moreover, the vibrations of the movable portion generated by the alternating field are made larger because the frequency of the alternating field, that is, the rotating speed of a spindle motor or the frequency of the alternating field generated by the magnet of the turntable, and the resonance frequency of the movable portion affect each other so that the tracking servo is sometimes disabled.

Approaching the clamper and the turntable, the actuator movable portion is positioned obliquely below the magnet of the turntable, and at this time the optical axis of the objective lens provided on the movable portion becomes oblique relative to the disk because the actuator movable portion receives the obliquely attracting/repulsing action by the magnet of the turntable as described above. As a result, the aberration of the objective lens appears in a spot on the disk to thereby increase the error rate of the detection signal. Correction for the slanting of the objective lens as described above cannot be performed by means of a focusing servo for controlling the objective lens in the direction of the optical axis thereof and by means of a tracking servo for controlling the objective lens in the direction perpendicular to the optical axis of the objective lens. There is a problem, therefore, in that the increase in the error rate results in the reproducing capability of the optical disk player.

The present invention has been attained in view of the foregoing circumstances, and an object thereof is to obtain sufficient reproducing capability without adverse effects caused by the magnet clamp apparatus influencing the actuator movable portion of the optical pickup; the pickup being provided with a magnetic circuit constituting member such as a magnet, a yoke, and the like.

In order to attain the foregoing object, in the optical disk player according to the present invention a magnetic constituent member of a magnetic circuit for driving an actuator is attached on a member for holding an objective lens on a movable side of the actuator, and an anti-magnetism body is disposed surrounding a clamping magnet. The leakage flux coming from the magnet attached on the turntable is magnetically led by the anti-magnetism body and the amount of leakage flux coming outside is remarkably reduced. As a result, the magnetic member provided on the movable portion of the actuator of the optical pickup is hardly affected by the leakage flux.

In the accompanying drawings:-

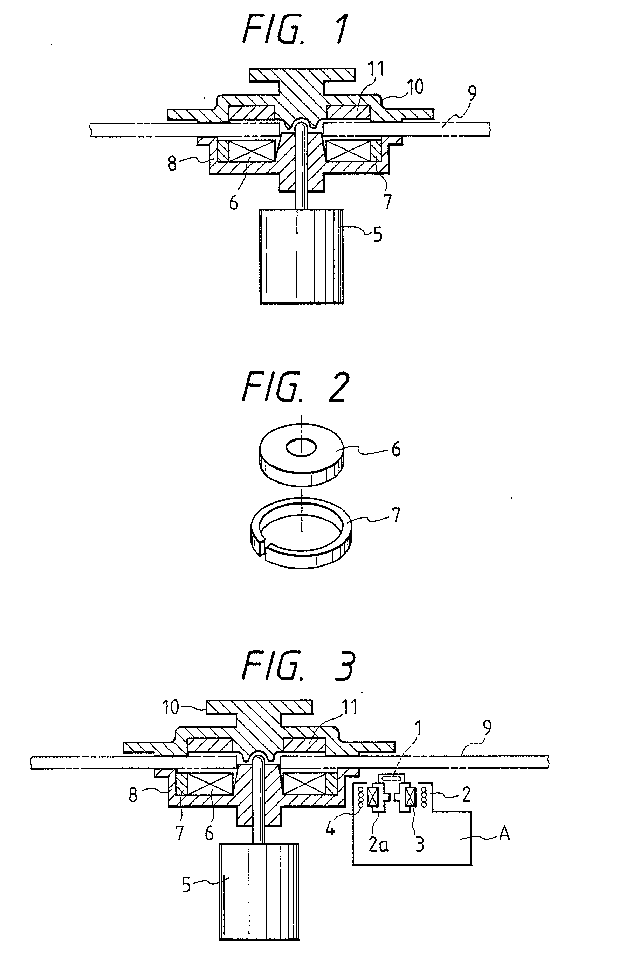

Fig. 1 is a sectional view showing an embodiment of the present invention;

Fig. 2 is a perspective view showing the magnet and the anti-magnetism body;

Fig. 3 is a sectional view showing the relation with the optical pickup;

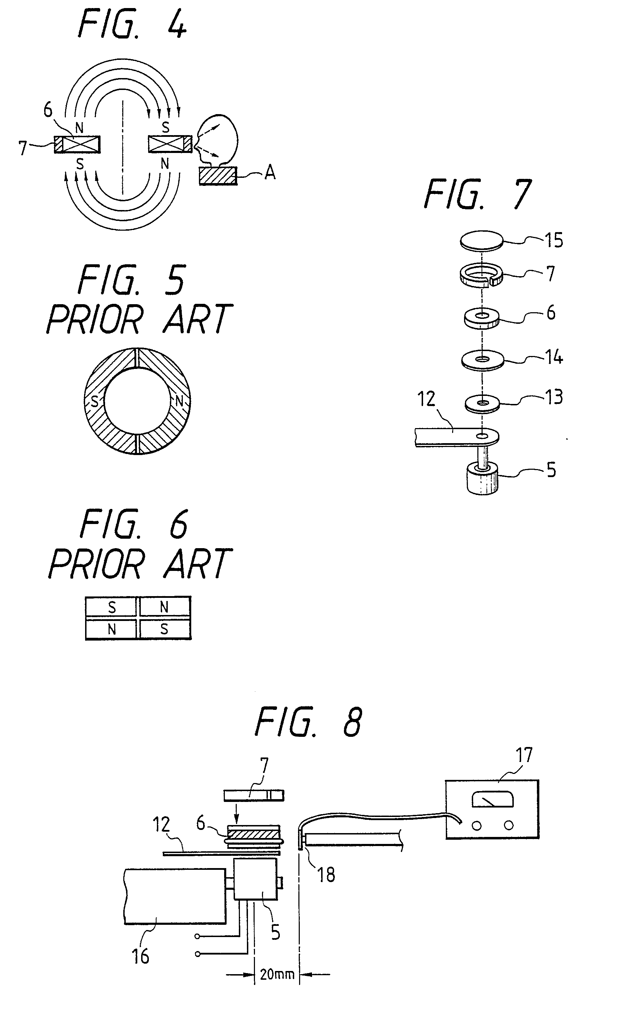

Fig. 4 is a view for explaining the state of leakage flux led by the anti-magnetism body;

Figs. 5 and 6 are plan and sectional view of a magnet which may be used in the invention;

Fig. 7 is a exploded perspective view of an experimental set up for leakage flux measurement;

Fig. 8 is another view of the experimental leakage flux;

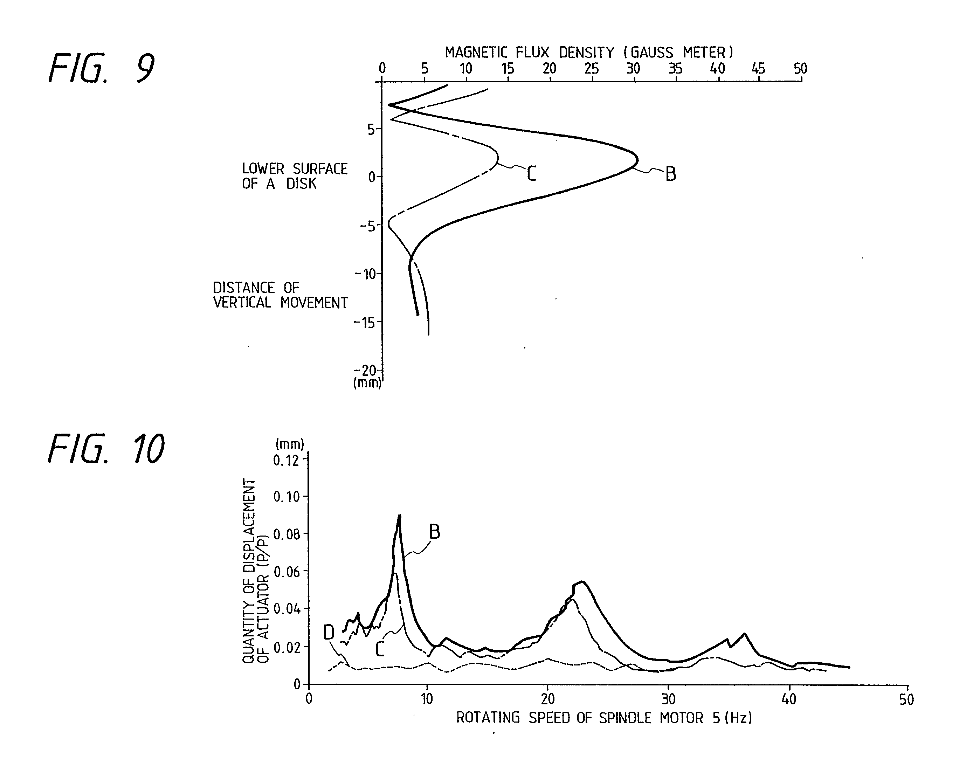

Fig. 9 is a graph view showing the results of measuring the leakage flux;

Fig. 10 is a graph view showing the measured displacement of an actuator depending on the existence of the anti-magnetism body;

Fig. 11 is a schematic view showing the conventional MC-type optical pickup;

Fig. 12 is a schematic view showing the conventional MM-type optical pickup;

Fig. 13 is a view for explaining leakage flux from the magnet having no anti-magnetism body;

Fig. 14 is a sectional view showing another magnetized state of the magnet according to the present invention;

Fig. 15 is a view for explaining leakage flux in the condition of Fig. 14; and

Fig. 16 is a plan view showing a further magnetized state of the magnet according to the present invention.

A preferred embodiment of the present invention will be described with reference to Figs. 1 and 2.

The reference numeral 5 designates a spindle motor. A ring-like magnet 6 and a ring-like anti-magnetism body 7 disposed at the outer circumference of the magnet 6 are buried inside a turntable 8 so that the magnet 6 and the anti-magnetism body 7 are partly exposed at the surface of the turntable 8. The turntable 8 is fixedly mounted on the shaft of the spindle motor 5. The anti-magnetism body 7 is formed of a magnetic material, and the quality, thickness, shape, and the like, of the anti-magnetism body 7 are suitably selected so that leakage flux is saturated in use.

An iron plate 11 is buried in a clamper 10 for clamping a disk 9 onto the turntable 8 so that the iron plate 11 is exposed at a lower surface of the clamper 10.

The magnet 6 is magnetized so as to be divided into two poles as shown in Figs. 5 and 6.

Therefore, the leakage flux coming out from the magnet 6 toward the outer circumference of the magnet 6 is magnetically led by the anti-magnetism body 7 as shown in Fig. 4, so that the leakage flux can be remarkably decreased.

In the optical pickup used in this embodiment, a so-called MM-type actuator is utilized. The MM-type pickup is arranged so that a pair of magnets 3 are fixedly attached on the outer peripheral portions of a holding member 2a for holding an objective lens 1, and coils 4 are disposed at the outer peripheral portions of the magnets 3 (at the body side of the pickup A) as shown in Fig. 3.

In the thus configured optical disk player, when the pickup A comes closest to the central portion of a disk, that is comes closest to the turntable 8 for reading the inner circumferential recording portion of the disk, one of the pair of magnets 3 located closer to the turntable 8 is in a position to be easily affected by the magnet 6 of the turntable 8. The magnet 3, however, never receives the attracting/ repulsing action because the leakage flux coming out from the magnet 6 is suppressed to the utmost by the ring-like anti-magnetism body 7.

Further, although magnets 3 are disposed in the direction of movement of pickup A (in the radial direction of a disk) in the MM-type pickup in the foregoing embodiment, an actuator in which a pair of magnets 3 are disposed in the direction perpendicular to the direction of movement of the pickup A (in the circumferencial direction of the disk) may be used in place of the foregoing actuator. In the latter case, when the pickup reaches a predetermined innermost recording position of the disk the magnets 3 are further from the magnet 6 in comparison with the arrangement of the magnets 3 in the embodiment of Fig. 3, so that influence of the leakage flux from the magnet 6 is further reduced. Further, the attracting repulsing action of the magnet 6 on magnets 3 are even, so that a rolling action of an actuator movable portion 2a, that is, on an objective lens 1. will be small.

The effects of the present invention as described above are apparent from the results of such an experiment as shown in Figs. 7 and 8.

An apparatus to be measured in the experiment was arranged so that an iron plate 12, a disk table 13, a spacer 14 of a non-magnetic material corresponding to an optical disk such as a compact disk or the like, a magnet 6 provided at its outer circumference with a ring-like anti-magnetism body 7, and an upper cover 15 of a flat iron plate ring were put one on one in the order shown on a spindle motor 5 as shown in Fig. 7, and the spindle motor 5 was supported by a motor fixing guide 16 as shown in Fig. 8.

Leakage flux was measured in a manner so that a gauss meter Hall element 18 connected to a guass meter 17 was vertically moved at the position separated from the center of the spindle motor by 20 mm.

Fig. 9 shows the results of measurement.

In the drawing, the ordinate represents the distance of vertical movement of the gauss meter Hall element 18 with the lower surface of the spacer 14 (equivalent to the lower surface of a disk) corresponding to "O" distance, the abscissa represents the magnetic flux density indicated by the gauss meter. Curve C represents the case of using the anti-magnetism body 7, and curve B represents the case of using no anti-magnetism body 7.

As seen from Fig. 9, the use of the anti-magnetism body 7 may reduce the leakage flux to a half or less at the side of the magnet 6.

Fig. 10 shows the results of measurement of the quantity of displacement of the actuator 2 of the MM-type optical pickup A in the tracking direction when the spindle motor 5 was actually rotated.

In the drawing, the ordinate represents the quantity of displacement of the actuator in the tracking direction, the abscissa represents the rotating speed of the spindle motor 5, curve C represents the case of using the anti-magnetism body 7, and curve B represents the case where the anti-magnetism body 7 had been removed.

In Fig. 10, the maximum quantity of displacement was 0.06 mm in the case of curve C, although it was 0.09 mm in the case of curve B, and it was found that the leakage flux and influence of the alternating field due to the leakage flux were reduced.

Further, in Fig. 10 curve D represents the case of using the most generally-used MC-type optical pickup in which no magnetic circuit constituent member was provided but only the coils were attached on the actuator movable portion, and in this case, it was found that influence of the magnet 6 of the turntable 8 was further diminished. Therefore, the effects of the present invention can be obtained in an optical disk player using a pickup in which a magnetic circuit constituting member is attached on a movable portion 2, that is, an MM-type pickup or an MC-type pickup in which a magnetic material is attached on a movable portion 2.

Although the ring-like magnet is magnetized in such a manner as shown in Figs 5 and 6 in this embodiment, the magnet 6 may be magnetized so that the opposite surfaces are made to be the S and N poles respectively as shown in Fig. 14 so that the magnet is divided into four poles or more as shown in Fig. 16.

If the magnet 6 is magnetized in such a manner as shown in Figs. 14 and 16, the clamping function itself is not as strong as in the previous case. In the case of Fig. 14, a part of the magnetic flux generated from an upper surface of the magnet 6 for attracting the iron plate 11 of the clamper 10 flows into the anti magnetism body 7 as shown in Fig. 15. In the case of Fig. 16 the attracting force of the magnet 6 for the iron plate 11 is weakened because it is difficult to obtain uniform magnetic flux strength when magnetization of the magnet 6 is performed by coils to thereby make magnetic flux density small in a part of the poles. The action and effect of the present invention, however, can be obtained also in the case Figs. 14 and 16 in the same manner as the foregoing embodiment.

Further, although the magnet 6 is attached on the turntable 8 and the iron plate 11 is attached on the clamper 10 in this embodiment, the same effects as those of the embodiment can be obtained where the iron plate is attached on the turntable 8 and the magnet 6 is attached to the clamper 10.

Although the ring-like anti-magnetism body 7 is used in this embodiment, it is needless to say that the same effects can be obtained in the case where the anti-magnetism body 7 has a cuplike or rectangular shape.

As described above, according to the present invention, the apparatus is arranged so that the magnetic constituent member of the magnetic circuit for driving the actuator is attached on the holding member for holding the objective lens, and the anti-magnetism body is disposed in the surrounding of the clamping magnet.

Therefore, the leakage flux coming out from the clamping magnet is minimized by means of the anti-magnetism body to thereby make it possible to prevent the adverse effects of the leakage flux on the actuator movable portion, so that sufficient reproducing capability of the optical disk player can be obtained.

## Claims

1. An optical disk player comprising:
a turntable rotatable while carrying a disk having information recorded thereon;
an optical pickup for reading the recorded information from said disk carried by said turntable; said optical pickup including an optical system and an actuator; said actuator comprising a movable portion provided with an objective lens and a holding member for holding said objective lens, and a drive portion provided with a magnetic circuit constituting member and a coil; and
a clamper mechanism comprising a first part for cooperating with said turntable to hold said disk on said turntable, a clamping magnet for generating an attracting force, an anti-magnetism body disposed surrounding said clamping magnet, and a magnetic material attracted by said attracting force; one of said clamping magnet and said magnetic material being on said first part and the other being on said turntable.

2. An optical disk player as claimed in claim 1, wherein said magnetic circuit constituting member is attached to said holding member.

3. An optical disk player as claimed in claim 1, wherein said coil is attached to said holding member.

4. An optical disk player as claimed in claim 2, wherein said clamping magnet is on said first part.

5. An optical disk player as claimed in claim 3, wherein said clamping magnet is on said first part.

6. An optical disk player as claimed in claim 2, wherein said clamping magnet is on said turntable.

7. An optical disk player as claimed in claim 3, wherein said clamping magnet is on said turntable.

## FIG. 1

## FIG. 2

## FIG. 3

# FIG. 4

# FIG. 5
# PRIOR ART

# FIG. 6
# PRIOR ART

# FIG. 7

# FIG. 8

# FIG. 9

MAGNETIC FLUX DENSITY (GAUSS METER)

LOWER SURFACE OF A DISK

DISTANCE OF VERTICAL MOVEMENT

# FIG. 10

QUANTITY OF DISPLACEMENT OF ACTUATOR (P/P)

ROTATING SPEED OF SPINDLE MOTOR 5 (Hz)

EP 0 351 032 A2

FIG. 11
PRIOR ART

FIG. 12
PRIOR ART

FIG. 13

FIG. 14

FIG. 15

FIG. 16